# EUROPÄISCHE PATENTSCHRIFT

(11) **EP 1 647 481 B1**
(45) Veröffentlichungstag und Bekanntmachung des Hinweises auf die Patenterteilung: **23.04.2008**
(21) Anmeldenummer: 05022503.6
(22) Anmeldetag: 14.10.2005
(51) Int. Cl.: B64C 1/14

(54) **Fensterelement eines Luftfahrzeuges**
Window element for an aircraft
Elément de fenêtre pour aéronef

(30) Priorität: 15.10.2004 DE 102004050399
(43) Veröffentlichungstag der Anmeldung: 19.04.2006
(73) Patentinhaber: Airbus Deutschland GmbH, 21129 Hamburg (DE)
(72) Erfinder: Paspirgilis, Bernd, 24972 Steinbergkirche (DE)
(74) Vertreter: Dilg, Andreas

(56) Entgegenhaltungen:
- EP-A- 1 342 553
- EP-A2- 0 936 139
- WO-A-20/04011249
- GB-A- 842 657
- GB-A- 2 289 649

## Beschreibung

Die Erfindung betrifft ein Fensterelement zum Einsetzen in einen Fensterausschnitt in einer Außenhaut eines Verkehrsmittels, insbesondere eines Luftfahrzeuges.

Fensterelemente zum Einsetzen in Rumpfzellen von Luftfahrzeugen sind in vielfältigen Variationen aus dem Stand der Technik bekannt, wie z.B. aus der EP 0 936 139. Derartige Fensterelemente umfassen unter anderem einen geschmiedeten Fensterrahmen aus Aluminium, der die eigentliche tragende Struktur des Fensterelementes bildet. Der Fensterrahmen weist hierbei im Wesentlichen eine T-förmige Querschnittsgeometrie auf.

Der Fensterrahmen weist einen umlaufenden Befestigungsflansch mit einer umlaufenden Ausnehmung auf. Der Fensterrahmen ist im Bereich der Ausnehmung in einem Randbereich des Fensterausschnittes fest mit der Innenseite der Rumpfzelle verbunden. Diese Verbindung kann beispielsweise durch Vernieten, Verkleben, Verschweißen oder dergleichen erfolgen. Hierdurch ergibt sich eine mechanische Verstärkung des Fensterausschnittes innerhalb der Rumpfzelle.

Weiterhin dient der Fensterrahmen zur Befestigung eines Andruckrahmens durch mehrere, vorzugsweise gleichmäßig über den Umfang des Fensterrahmens verteilte Befestigungselemente, beispielsweise in der Form von Augbolzen. Die Augbolzen sind mit ihren Befestigungsaugen an einem in etwa senkrecht zum Befestigungsflansch angeordneten, umlaufenden Steg des Fensterrahmens befestigt, beispielsweise angenietet. Die Augbolzen weisen jeweils an ihren von den Befestigungsaugen wegweisenden Enden Gewindeabschnitte zur Aufnahme von Schraubenmuttern auf. Die Gewindeabschnitte der Augbolzen sind durch entsprechende Öffnungen im Andruckrahmen hindurch führbar.
Darüber hinaus weist der Fensterrahmen eine nach innen gerichtete, konische Auflagefläche zur Auflage eines aus einer Innenscheibe und einer Außenscheibe gebildeten Fensterpaketes auf. Die Innenscheibe und die Außenscheibe sind hierbei von einer umlaufenden Fensterdichtung eingefasst, die mittels des Andruckrahmens auf die konische Auflagefläche gepresst wird. Das Fensterpaket mit der Fensterdichtung wird vom Innenraum der Rumpfzelle aus auf die Auflagefläche des Fensterrahmens aufgelegt und mittels des Andruckrahmens zentriert und fixiert. Durch das Anziehen der Schraubenmuttern auf den Gewindeabschnitten der Augbolzen werden anschließend der Andruckrahmen, das Fensterpaket sowie der Fensterrahmen fest gegeneinander verspannt.

Dem Fensterrahmen kommen bei den vorbekannten Ausführungsformen von Fensterelementen eine Vielzahl von Aufgaben zu. Zunächst verstärkt der Fensterrahmen den Fensterausschnitt in der Rumpfzelle. Darüber hinaus gewährleistet der Fensterrahmen die druckdichte Anlage sowie die Zentrierung des Fensterpaketes und der Fensterdichtung. Ferner wird das Fensterpaket gegen Herausfallen und/oder Herausdrücken gesichert. Schließlich bildet der Fensterrahmen einen von außen sichtbaren Rand, der möglichst günstige aerodynamische Übergange von der Außenhaut der Rumpfzelle zum Außenfenster des Fensterpaketes sicherstellen soll.

Bekannte Ausführungsformen von Fensterelementen weisen Fensterrahmen auf, die auf Grund der vorstehend geschilderten vielfältigen Anforderungen konstruktiv sehr komplex ausgebildet sind. Derartige Fensterrahmen müssen wegen der hohen mechanischen Beanspruchung aus Aluminium geschmiedet und anschließend maschinell nachbearbeitet werden, wobei die Anforderungen an die Genauigkeit sehr hoch sind. Infolge der erforderlichen aufwändigen Ausbildung der Fensterrahmen, der Vielzahl der zusätzlichen Verbindungselemente sowie der Tragrahmen ist das Gewicht der bekannten Fensterelemente sehr hoch.

Darüber hinaus gestaltet sich die Montage der bekannten Fensterelemente aufwändig. Zunächst ist es erforderlich, den Fensterrahmen exakt im Fensterausschnitt zu positionieren und anschließend im Randbereich des Fensterausschnittes mit der Rumpfzelle zu vernieten. Im Anschluss daran werden bis zu sechs Augbolzen einzeln an den Fensterrahmen genietet. Danach wird das Fensterpaket in den Fensterrahmen eingelegt, wobei eine zweite Person von außen den korrekten Sitz des Fensterpaketes kontrollieren und gegebenenfalls korrigieren muss. Schließlich wird der Andruckrahmen auf die Augbolzen aufgefädelt und durch Schraubenmuttern fest mit dem Fensterrahmen verschraubt. Hierbei drückt der Andruckrahmen elastisch auf das Fensterpaket und hält dieses in der vordefinierten Position innerhalb des Fensterrahmens.

Darüber hinaus ergeben sich durch den Einsatz der vorbekannten Ausführungsformen von Fensterelementen in Rumpfzellen von Luftfahrzeugen oftmals aerodynamische Beeinträchtigungen. Denn der Befestigungsflansch des Fensterrahmens der bekannten Fensterelemente weist, um einen in etwa bündigen Abschluss der Außenscheibe des Fensterpaketes mit der Außenhaut der Rumpfzelle zu gewährleisten, eine umlaufende Ausnehmung auf, deren Tiefe ungefähr der Materialstärke der zur Bildung der Außenhaut üblicherweise verwendeten Bleche entspricht. Die Außenhaut der Rumpfzellen von Luftfahrzeugen weist jedoch in unterschiedlichen Rumpfabschnitten oftmals unterschiedliche Materialstärken auf, sodass die Außenscheiben der eingesetzten Fensterelemente nicht in allen Rumpfabschnitten des Luftfahrzeuges vollständig bündig mit der Außenhaut abschließen. Weiterhin erzeugt der Differenzdruck in großen Flughöhen eine Ausbeulung der äußeren Scheibe, die Beträge von bis zu 4 Millimetern über den Außenstrak ergeben kann. Durch die vorstehend geschilderten aerodynamischen Effekte kommt es zu Störungen in der Anströmung der Rumpfzelle, die die aerodynamische Güte der Außenhaut der Rumpfzelle eines Luftfahrzeuges, insbesondere bei einer großen Anzahl von in die Rumpfzelle eingesetzten Fensterelementen, erheblich beeinträchtigen können.

Aufgrund der vorstehend aufgezeigten Nachteile der bekannten Ausführungsformen von Fensterelementen sind diese nur bedingt für den Einsatz in Luftfahrzeugen mit großen Abmessungen und einer hieraus resultierenden hohen Anzahl von Fensterelementen geeignet.

Aufgabe der Erfindung ist es, die vorstehend beschriebenen Nachteile der bekannten Ausführungsformen von Fensterelementen für Luftfahrzeuge zu vermeiden.

Diese Aufgabe wird durch eine Vorrichtung mit den Merkmalen des Patentanspruchs 1 gelöst.

Dadurch, dass das Fensterelement eine Abdeckscheibe aufweist, die im Wesentlichen bündig mit der Außenhaut abschließt, um eine strömungstechnisch günstige, weitgehend ebene Gestaltung der Außenhaut zu erreichen,
ergibt sich eine hohe aerodynamische Güte der Außenhaut, die unabhängig von einer Ausbeulung einer Außenscheibe des Fensterelementes infolge einer Differenz zwischen dem Kabineninnendruck und dem Umgebungsluftdruck in großen Flughöhen ist. Darüber hinaus ist das erfindungsgemäße Fensterelement einfach, leicht und schnell in einen Fensterausschnitt in einer Rumpfzelle eines Luftfahrzeuges zu montieren. Schließlich lassen sich einige der zur Bildung des erfindungsgemäßen Fensterelementes erforderlichen Bauteile fertigungstechnisch leicht, schnell und mit der erforderlichen hohen Maßhaltigkeit, beispielsweise mit faserverstärkten Kunststoffmaterialien im Spritzgussverfahren herstellen.

Nach der Erfindung weist das Fensterelement einen Fensterrahmen mit einer Fensterrahmenaußenfläche auf, wobei die Fensterrahmenaußenfläche in einem Randbereich des Fensterausschnittes zumindest bereichsweise mit einer Außenhautinnenfläche verbindbar ist.
Hierdurch ist eine leichte Montage des Fensterrahmens in einen Fensterausschnitt der Außenhaut eines Luftfahrzeuges gegeben.

Nach der Erfindung des Fensterelementes liegt ein Tragrahmen innerhalb des Fensterausschnittes zumindest bereichsweise auf der Fensterrahmenaußenfläche auf.
Durch diese Ausgestaltung ist gewährleistet, dass weitere Anbauteile des Fensterelementes leicht von der Innenseite des Luftfahrzeuges aus montiert werden können.

In Gemäßheit der Erfindung liegt die Abdeckscheibe auf dem Tragrahmen auf, ist insbesondere mit diesem zumindest bereichsweise verbunden.
Hierdurch ist ein im Wesentlichen bündiger Abschluss der Außenhaut des Luftfahrzeuges mit der Außenfläche der Abdeckscheibe gegeben, sodass sich ein aerodynamisch günstiger Abschluss des Fensterelementes mit der Außenhaut ergibt.

Nach Maßgabe der Erfindung weist eine Tragrahmenaußenfläche zumindest bereichsweise Vertiefungen auf, um eine Hinterlüftung der Abdeckscheibe zu erreichen.
Durch diese Ausgestaltung wird erreicht, dass zwischen der Außenscheibe des Fensterelementes und der Abdeckscheibe in Abhängigkeit von der Flughöhe des Luftfahrzeuges jeweils nur der Umgebungsluftdruck wirkt. Eine aerodynamisch unvorteilhafte, Ausbeulung der Abdeckscheibe bei einer zunehmenden Flughöhe des Luftfahrzeuges, wie sie bei der mit dem vollen Kabineninnendruck beaufschlagten Außenscheibe auftritt, wird vermieden, sodass sich unabhängig von den herrschenden Außendruckverhältnissen stets ein im Wesentlichen bündiger, strömungstechnisch vorteilhafter Abschluss des erfindungsgemäßen Fensterelementes mit der Außenhaut des Luftfahrzeuges ergibt.

Gemäß einer weiteren vorteilhaften Ausgestaltung weist der Tragrahmen mindestens ein Verbindungselement zur Verbindung mit dem Fensterrahmen und einem Andruckrahmen auf.
Durch diese konstruktive Ausgestaltung ist eine feste Verspannbarkeit des Fensterrahmens mit einem Andruckrahmen gegeben.

Nach Maßgabe einer weiteren vorteilhaften Ausgestaltung ist zwischen dem Andruckrahmen und dem Fensterrahmen eine Fensterrahmendichtung zur Aufnahme einer Innenscheibe und einer Außenscheibe mittels des Verbindungselementes oder der Verbindungselemente einspannbar.
Mittels dieser konstruktiven Ausgestaltung ist die vollständige und sichere Abdichtung des Innenraums des Luftfahrzeuges gegenüber der umgebenden Atmosphäre gewährleistet.

Weitere vorteilhafte Ausgestaltungen der Anordnung sind in den weiteren Patentansprüchen dargelegt.

In der Zeichnung zeigt:
- **Fig. 1**: Ein Fensterelement in einer Querschnittsdarstellung,
- **Fig. 2**: eine Außenansicht des in eine Außenhaut eines Luftfahrzeuges eingesetzten Fensterelementes und
- **Fig. 3**: eine Innenansicht des in eine Außenhaut eines Luftfahrzeuges eingesetzten Fensterelementes.

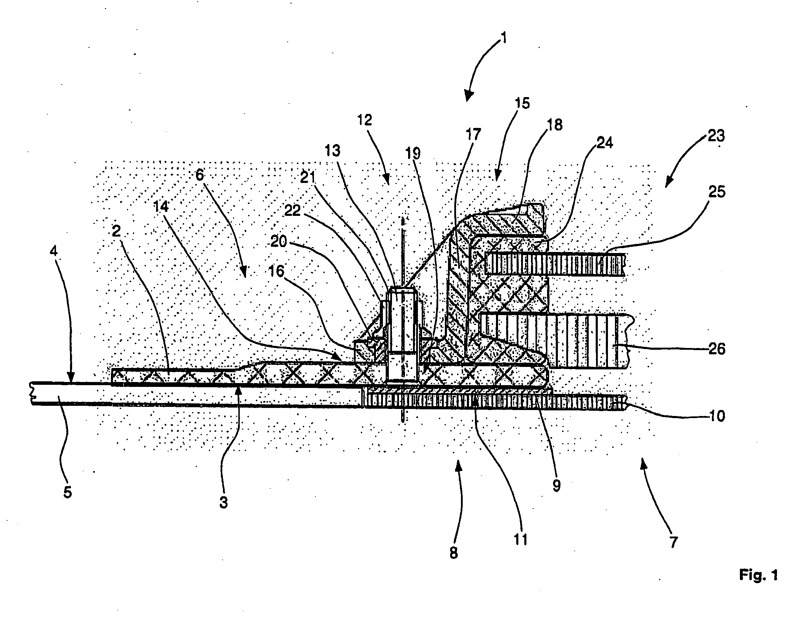

Die **Fig. 1** zeigt einen Querschnitt durch ein erfindungsgemäßes Fensterelement.

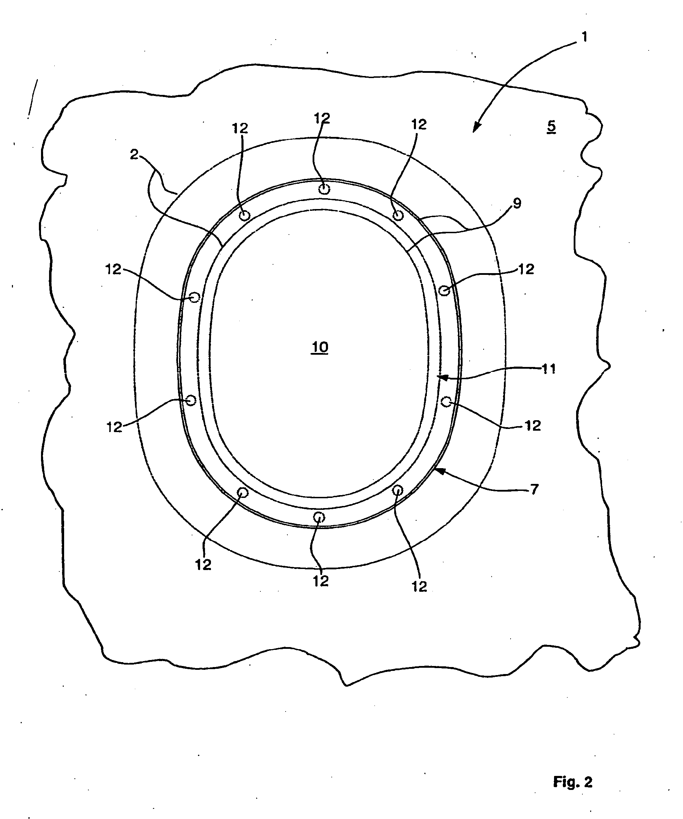

Das erfindungsgemäße Fensterelement 1 umfasst unter anderem einen Fensterrahmen 2 mit einer Fensterrahmenaußenfläche 3. Der Fensterrahmen 2 weist eine im Wesentlichen rechteckförmige Querschnittsgeometrie auf. Von oben gesehen weist der erfindungsgemäße Fensterrahmen 2 in Anlehnung zu bekannten Fensterelementen für Luftfahrzeuge im Wesentlichen eine ovale, kreisrunde, elliptische oder eckige Umfangskontur mit gegebenenfalls abgerundeten Kanten auf (vgl. Fig. 2).

Der Fensterrahmen 2 liegt mit der Fensterrahmenaußenfläche 3 teilweise auf einer Außenhautinnenfläche 4 einer Außenhaut 5 im Randbereich 6 eines Fensterausschnittes 7 einer Rumpfzelle eines Luftfahrzeuges auf. Der Fensterrahmen 2 ist in diesem Bereich vorzugsweise vollflächig mit der Außenhautinnenfläche 4 verklebt, vernietet oder auf andere Art und Weise fest verbunden. Das Luftfahrzeug sowie die Rumpfzelle sind in der Darstellung der Fig. 1 der besseren Übersicht halber nicht näher dargestellt. Der Fensterrahmen 2 ist vorzugsweise mit einem Kunststoffmatterial, insbesondere aus einem faserverstärkten Kunststoffmaterial, gebildet.

Der Fensterrahmen 2 ist hierbei - bezogen auf seine Breite - nur etwa hälftig, bis zum Beginn eines Auflagebereiches 8, mit dem Randbereich 6 des Fensterausschrittes 7 verbunden. Im Auflagebereich 8 der Fensterrahmenaußenfläche 3 liegt ein Tragrahmen 9 mit einer Abdeckscheibe 10 auf dem Fensterrahmen 2 auf. Der Tragrahmen 9 weist auf einer Tragrahmenaußenfläche 11 eine Vielzahl von durchgehenden, parallel zur Abdeckscheibe 10 verlaufenden Vertiefungen, beispielsweise in der Form von Nuten, Schlitzen oder Kanälen auf. Durch die Vertiefungen wird ein Druckausgleich zwischen dem durch die Außenscheibe 26 und der Abdeckscheibe 10 gebildeten Bereich sowie der Außenumgebung des Luftfahrzeuges ermöglicht. Alternativ kann auch nur eine durchgehende Vertiefung in der Form einer Nut, eines Schlitzes oder eines Kanals vorgesehen sein, wobei diese Vertiefung dann labyrinthartig in die Tragrahmenaußenfläche 11, auf der die Abdeckscheibe 10 angeordnet ist, eingebracht ist. Zwischen dem Tragrahmen 9 und der Abdeckscheibe 10 ist aufgrund dieser Vertiefungen keine Abdichtungswirkung gegenüber Luftdruckschwankungen gegeben. Die Vertiefungen sind in der Darstellung der Fig. 1,2 nicht dargestellt.

Der Tragrahmen 9 weist darüber hinaus mehrere Verbindungselemente auf. Die Verbindungselemente sind vorzugsweise gleichmäßig zueinander beabstandet über den Umfang des Tragrahmens 9 verteilt angeordnet (vgl. Fig. 2). Das in der Fig. 1 repräsentativ für die Übrigen dargestellte Verbindungselement 12 weist unter anderem einen Stehbolzen 13 auf, der fest mit dem Tragrahmen 9 verschweißt und/oder vernietet ist. Der Tragrahmen 9 weist einschließlich der Abdeckscheibe 10 eine Materialstärke auf, die etwa einer Materialstärke der Außenhaut 5 im Randbereich 6 des Fensterausschnittes 7 entspricht, um einen im Wesentlichen bündigen und demzufolge strömungstechnisch günstigen Abschluss mit der Außenhaut 5 der Rumpfzelle des Luftfahrzeugs zu erzielen. Der Tragrahmen 9 ist vorzugsweise mit einem metallischen Werkstoff gebildet. Alternativ kann der Tragrahmen 9 zumindest teilweise aus einem Kunststoffmaterial, insbesondere einem faserverstärkten Kunststoffmaterial, bestehen. Der Tragrahmen 9 weist zumindest auf der Tragrahmenau-ßenfläche 11 eine nicht transparente Beschichtung, Lackierung, Kaschierung oder dergleichen auf, um unter anderem eine von außen ansprechende optische Gestaltung zu erzielen.

Im Auflagebereich 8 des Fensterrahmens 2 liegt auf einer Fensterrahmeninnenfläche 14 ein Andruckrahmen 15 an dem Fensterrahmen 2 auf. Der Andruckrahmen 15 umfasst unter anderem einen unteren Schenkel 16, einen Steg 17 sowie einen oberen Schenkel 18. Der Steg 17 verbindet den unteren mit dem oberen Schenkel 16,18, sodass sich eine in etwa z-förmige Querschnittsgeometrie des Andruckrahmens 15 ergibt.

In den unteren Schenkel 16 sind mehrere Bohrungen eingebracht, in die zur Verstärkung jeweils Inlets eingesetzt sind. Die Bohrungen mit den Inlets sind gleichmäßig zueinander beabstandet über den Umfang des Andruckrahmens 15 verteilt angeordnet, sodass die Stehbolzen 13 spannungsfrei durch diese hindurch führbar sind. Eine Bohrung 19 mit einem Inlet 20 ist in der Fig. 1 repräsentativ für die Übrigen, nicht darstellbaren, über den Umfang des Andruckrahmens 15 verteilt angeordneten Bohrungen mit Inlet dargestellt. Der Stehbolzen 13 weist an seinem oberen Ende einen Gewindeabschnitt 21 auf, auf den eine Gewindemutter 22 aufbringbar ist. Anstatt des Verbindungselementes 12 in Form des Stehbolzens 13 mit dem Gewindeabschnitt 21, dem Inlet 20 sowie der Gewindemutter 22 können auch Nietverbindungen, Klemmverbindungen, Pressverbindungen oder dergleichen eingesetzt werden. Alternativ ist es möglich, den Tragrahmen 9, den Fensterrahmen 2 sowie den Andruckrahmen 15 durch vorzugsweise vollflächige Verklebungen miteinander zu verbinden.

Die Umfangskontur des Andruckrahmens 15 folgt im Wesentlichen der Umfangskontur des Fensterrahmens 2. Die Breite des unteren Schenkels 16 des Andruckrahmens 15 ist hierbei vorzugsweise geringer als die Breite des Fensterrahmens 2.

Mittels des Andruckrahmens 15 lässt sich ein Fensterpaket 23 fest zwischen dem Auflagebereich 8 des Fensterrahmens 2 und dem oberen Schenkel 18 des Andruckrahmens 15 einspannen. Das Fensterpaket 23 umfasst hierbei unter anderem eine Fensterrahmendichtung 24 mit einer Innenscheibe 25 und einer Außenscheibe 26. Die Innenscheibe 25 und die Außenscheibe 26 sind hierbei randseitig von der Fensterrahmendichtung 24 umfasst. Die Innenscheibe 25 und die Außenscheibe 26 weisen eine Umfangskontur auf, die parallel beabstandet ungefähr der Umfangskontur des Andruckrahmens 15, des Fensterrahmens 2 sowie des Fensterausschnittes 7 folgt.

Durch das Anziehen der Gewindemutter 22 auf dem Gewindeabschnitt 21 des Stehbolzens 13 lässt sich das Fensterpaket 23 fest zwischen dem Andruckrahmen 15 und dem Fensterrahmen 2 einspannen. Der Andruckrahmen 15 übernimmt hierbei zusätzliche Lasten durch die Verschraubung mit dem Fensterrahmen 2. Zusätzlich nimmt der Andruckrahmen 15 das Fensterpaket 23 auf, zentriert dieses und fixiert es in der einmal vorgegebenen Position. Auf Grund der Beschichtung, Lackierung bzw. Kaschierung des Tragrahmens 9 ist der Rand des von innen montierten Fensterpaketes 23 von außen nicht sichtbar, sodass auf eine genaue Ausrichtung des Fensterpaketes 23 verzichtet werden kann.

Sowohl die Innenscheibe 25 als auch die Außenscheibe 26 werden mit dem vollen Kabineninnendruck, der in etwa dem Luftdruck in Bodennähe entspricht, beaufschlagt, während außerhalb der Rumpfzelle bzw. der Außenhaut 5 des Luftfahrzeuges lediglich der in größeren Flughöhen sehr geringe Umgebungsluftdruck herrscht. Diese Druckdifferenz führt zu einer erheblichen mechanischen Belastung der Außenscheibe 26, die eine beträchtliche Ausbeulung bedingt. Der Betrag dieser druckbedingten Ausbeulung der Außenscheibe 26 kann in Einzelfällen bis zu mehreren Millimetern betragen.

Die Abdeckscheibe 10 ist in einem geringen Abstand der Außenscheibe 26 vorgeordnet, so dass die Außenscheibe 26 selbst bei maximaler Ausbeulung die Abdeckscheibe 10 nicht berührt. Hierdurch ist in jedem Betriebszustand, insbesondere in jeder Flughöhe, eine im Wesentlichen bündige und daher strömungstechnisch günstige Integration des erfindungsgemäßen Fensterelementes 1 in die Außenhaut 5 des Luftfahrzeuges gewährleistet, auch wenn sich die Außenscheibe 26 infolge einer hohen Differenz zwischen dem Kabineninnendruck und dem Umgebungsluftdruck nach außen verformt. Im Bereich zwischen der Außenscheibe 26 und der Abdeckscheibe 10 herrscht infolge der im Tragrahmen 9 befindlichen Vertiefungen kein Druckunterschied, sodass sich die Abdeckscheibe 10 nicht deformieren kann.

Die Fig. 2 zeigt eine Außenansicht des in die Außenhaut 5 eines Luftfahrzeuges eingesetzten Fensterelementes 1.

Der Fensterrahmen 2 ist nicht sichtbar hinter der Außenhaut 5 bzw. dem Tragrahmen 9 innerhalb des Fensterausschnittes 7 angeordnet. Insgesamt zehn Verbindungselemente 12 befinden sich unterhalb der Beschichtung, Kaschierung bzw. Lackierung des Tragrahmens 9 und sind in der Darstellung der Fig. 2 nicht sichtbar, obwohl die Abdeckscheibe 10 aus einem transparenten Kunststoffmaterial, beispielsweise aus Polycarbonat, gebildet ist.

Die transparente Abdeckscheibe 10 füllt, bis auf einen schmalen Fugenbereich zwischen einer Innenkante des Fensterausschnittes 7 und einem umlaufenden Rand der Abdeckscheibe 10, den Fensterausschnitt 7 nahezu vollflächig aus. Hierdurch ergibt sich eine strömungstechnisch sehr vorteilhafte, weil im Wesentlichen bündige Ausgestaltung des in die Außenhaut 5 eingesetzten Fensterelementes 1.

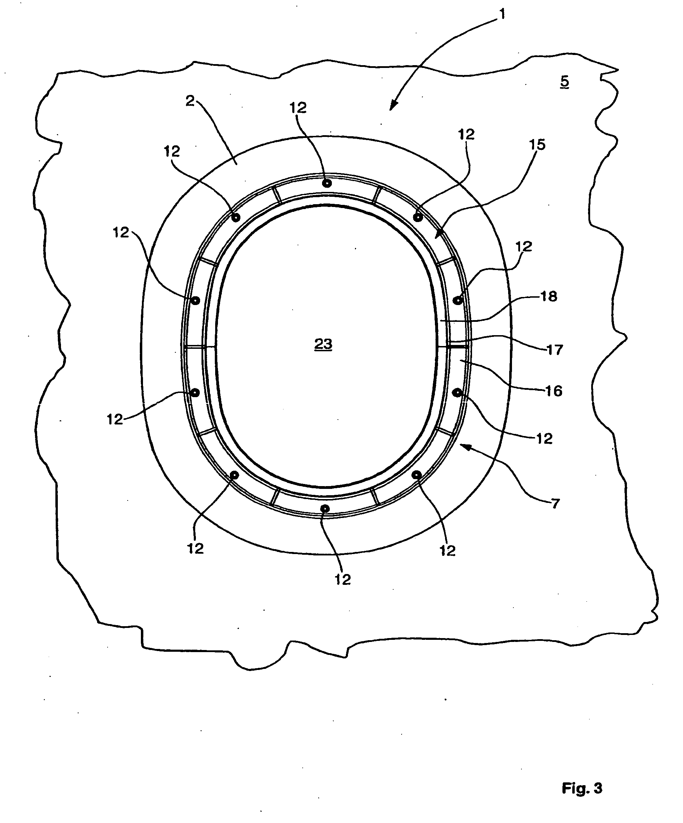

Die Fig. 3 zeigt eine Innenansicht des in die Außenhaut 5 eines Luftfahrzeuges eingesetzten Fensterelementes 1.

Der Fensterrahmen 2 umfasst den Fensterausschnitt 7 in der Außenhaut 5 des Luftfahrzeuges. Der Andruckrahmen 15 ist mit einem unteren Schenkel 16 zur Auflage auf dem Fensterrahmen 2, einem im Wesentlichen senkrecht auf dem unteren Schenkel 16 angeordneten Steg 17, der in etwa einer Höhe des Fensterpaketes 23 entspricht, sowie einem zur Mitte des Fensterausschnittes 7 weisenden oberen Schenkel 18 zur Einfassung des Fensterpaketes 23 gebildet. Der Andruckrahmen 15 wird hierbei durch die zehn Verbindungselemente 12 fest mit dem Fensterrahmen 2, dem Tragrahmen 9 sowie dem Fensterpaket 23 verspannt.

Abgesehen von der aerodynamisch vorteilhaften Integration in die Außenhaut eines Luftfahrzeuges ist eine fertigungstechnisch einfache, schnelle und präzise Herstellbarkeit des erfindungsgemäßen Fensterelementes 1 gegeben. Denn der Fensterrahmen 2 weist eine im Wesentlichen rechteckförmige Querschnittsgeometrie auf, die beispielsweise leicht im Spritzgussverfahren aus faserverstärkten Kunststoffmaterialien gefertigt werden kann.

Auch der Tragrahmen 9 weist eine im Wesentlichen rechteckförmige Querschnittsgeometrie auf, sodass sich dieser beispielsweise leicht durch Ausstanzen aus ebenen metallischen Materialien, beispielsweise Metallblechen oder dergleichen, herstellen lässt. Alternativ kann der Tragrahmen 9 auch im Spritzgussverfahren, beispielsweise aus einem faserverstärkten Kunststoffmaterial gefertigt werden. Die beispielsweise mit Polycarbonat gebildete Abdeckscheibe 10 ist vorzugsweise vollflächig mit der Tragrahmenaußenfläche 11 verklebt, verschweißt oder auf andere Art und Weise fest verbunden. Infolge der zwischen der Abdeckscheibe 10 und dem Tragrahmen 9 vorhandenen Vertiefungen, beispielsweise in Form von Nuten, Kanälen, Schlitzen oder dergleichen, ist ein Druckausgleich möglich.

Der Andruckrahmen 15 weist zwar mit dem unteren Schenkel 16, dem Steg 17 sowie dem oberen Schenkel 18 eine komplexere z-förmige Querschnittsgeometrie auf; kann aber gleichermaßen mit einem faserverstärkten Kunststoffmaterial im Spritzgussverfahren oder dergleichen hergestellt werden.

Schließlich lässt sich das erfindungsgemäße Fensterelement 1 auch auf einfache Art und Weise in einem Fensterausschnitt 7 in einer Rumpfzelle eines Luftfahrzeuges montieren. Zur Montage wird lediglich der Fensterrahmen 2 passgenau in den Fensterausschnitt 7 eingebracht und anschließend im Randbereich 6 mit der Außenhaut 5 beispielsweise durch Verkleben oder Vernieten verbunden. Anschließend kann der Tragrahmen 9 mit den Stehbolzen 13 und der Abdeckscheibe 10 von außen auf den Auflagebereich 8 des Fensterrahmens 2 aufgelegt werden. Die Stehbolzen 13 werden hierbei durch entsprechende Bohrungen im Fensterrahmen 2 hindurch gesteckt. Anschließend kann der Andruckrahmen 15 mit dem darin eingefassten Fensterpaket 23 von Innen auf die Stehbolzen 13 aufgesteckt bzw. aufgefädelt werden. Schließlich werden die Gewindemuttern auf die Gewindeabschnitte der Stehbolzen aufgeschraubt, wodurch der Fensterrahmen 2 mit dem das Fensterpaket 23 enthaltenden Andruckrahmen 15 sowie dem Tragrahmen 9 fest verspannt wird. Eine genaue Ausrichtung bzw. Zentrierung des Fensterpaketes 23 innerhalb des Fensterausschnittes 7 kann entfallen.

### Bezugszeichenliste

- 1: Fensterelement
- 2: Fensterrahmen
- 3: Fensterrahmenaußenfläche
- 4: Außenhautinnenfläche
- 5: Außenhaut
- 6: Randbereich
- 7: Fensterausschnitt
- 8: Auflagebereich
- 9: Tragrahmen
- 10: Abdeckscheibe
- 11: Tragrahmenaußenfläche
- 12: Verbindungselement
- 13: Stehbolzen
- 14: Fensterrahmeninnenfläche
- 15: Andruckrahmen
- 16: unterer Schenkel
- 17: Steg
- 18: oberer Schenkel
- 19: Bohrung
- 20: Inlet
- 21: Gewindeabschnitt
- 22: Gewindemutter
- 23: Fensterpaket
- 24: Fensterrahmendichtung
- 25: Innenscheibe
- 26: Außenscheibe

## Patentansprüche

1. Fensterelement (1) zum Einsetzen in einen Fensterausschnitt (7) in einer Außenhaut (5) eines Verkehrsmittels, insbesondere eines Luftfahrzeuges, aufweisend
eine Abdeckscheibe (10), wobei
die Abdeckscheibe (10) im Wesentlichen bündig mit der Außenhaut (5) abschließend ausgebildet ist, um eine strömungstechnisch günstige, weitgehend ebene Gestaltung der Außenhaut (5) zu erreichen;
einen Fensterrahmen (2) mit einer Fensterrahmenaußenfläche (3);
**gekennzeichnet durch**
einen innerhalb des Fensterausschnittes (7) angebrachten Tragrahmen (9) mit
einer Tragrahmenaußenfläche (11), wobei
der Tragrahmen (9) zumindest bereichsweise auf der Fensterrahmenaußenfläche (3) aufliegt; wobei
die Abdeckscheibe (10) auf dem Tragrahmen (9) aufliegt, insbesondere mit diesem zumindest bereichsweise verbunden ist, und wobei
die Tragrahmenaußenfläche (11) zumindest bereichsweise Vertiefungen aufweist, um eine Hinterlüftung der Abdeckscheibe (10) zu erreichen.

2. Fensterelement (1) nach Anspruch 1, wobei
die Fensterrahmenaußenfläche (3) in einem Randbereich (6) des Fensterausschnittes (7) zumindest bereichsweise mit einer Außenhautinnenfläche (4) verbindbar ist.

3. Fensterelement (1) nach einem der Ansprüche 1 bis 2, **dadurch gekennzeichnet, dass** der Tragrahmen (9) mindestens ein Verbindungselement (12) zur Verbindung mit dem Fensterrahmen (2) und einem Andruckrahmen (15) aufweist.

4. Fensterelement (1) nach einem der Ansprüche 1 bis 3, **dadurch gekennzeichnet, dass** zwischen dem Andruckrahmen (15) und dem Fensterrahmen (2) eine Fensterrahmendichtung (24) zur Aufnahme einer Innenscheibe (25) und einer Außenscheibe (26) mittels des Verbindungselementes (12) oder der Verbindungselemente einspannbar ist.

5. Fensterelement (1) nach einem der Ansprüche 1 bis 4, **dadurch gekennzeichnet, dass** das Verbindungselement (12) oder die Verbindungselemente insbesondere als durch Bohrungen (19) im Fensterrahmen (2) und im Andruckrahmen (15) führbare Stehbolzen (13) mit Gewindemuttern (22) ausgebildet sind.

6. Fensterelement (1) nach einem der Ansprüche 1 bis 5, **dadurch gekennzeichnet, dass** die Bohrungen im Andruckrahmen (15) Verstärkungselemente, insbesondere Inlets (20), aufweisen.

7. Fensterelement (1) nach einem der Ansprüche 1 bis 6, **dadurch gekennzeichnet, dass** mindestens sechs, vorzugsweise in etwa gleichmäßig zueinander beabstandete Stehbolzen (13) auf dem Tragrahmen (9) angeordnet, insbesondere auf diesen aufgeschweißt oder aufgenietet sind.

8. Fensterelement (1) nach einem der Ansprüche 1 bis 7, **dadurch gekennzeichnet, dass** der Fensterrahmen (2) eine im Wesentlichen rechteckförmige Querschnittsgeometrie aufweist.

9. Fensterelement (1) nach einem der Ansprüche 1 bis 8, **dadurch gekennzeichnet, dass** der Fensterrahmen (2) mit einem Kunststoffmaterial, insbesondere einem faserverstärkten Kunststoffmaterial und/oder mit einem Metall gebildet ist.

10. Fensterelement (1) nach einem der Ansprüche 1 bis 9, **dadurch gekennzeichnet, dass** der Andruckrahmen (15) mit einem Kunststoffmaterial, insbesondere mit einem faserverstärkten Kunststoffmaterial, gebildet ist.

11. Fensterelement (1) nach einem der Ansprüche 1 bis 10, **dadurch gekennzeichnet, dass** der Tragrahmen (9) eine im Wesentlichen rechteckförmige Querschnittsgeometrie aufweist.

12. Fensterelement (1) nach einem der Ansprüche 1 bis 11, **dadurch gekennzeichnet, dass** der Tragrahmen (9) als ein lackierter, beschichteter und/oder kaschierter Blechträger ausgebildet ist.

13. Fensterelement (1) nach einem der Ansprüche 1 bis 12, **dadurch gekennzeichnet, dass** die Fensterrahmenaußenfläche (3) zumindest bereichsweise mit der Außenhautinnenfläche (4) verbunden, insbesondere mit dieser verklebt und/oder vernietet ist.

14. Fensterelement (1) nach einem der Ansprüche 1 bis 13, **dadurch gekennzeichnet, dass** die Abdeckscheibe (10) mit dem Tragrahmen (9) verbunden, insbesondere mit diesem verklebt und/oder vernietet ist.

15. Fensterelement (1) nach einem der Ansprüche 1 bis 14, **dadurch gekennzeichnet, dass** die Abdeckscheibe (10) mit einem Kunststoffmaterial, insbesondere mit Polykarbonat, gebildet ist.

## Claims

1. Window element (1) for insertion in a window aperture (7) in an outer skin (5) of a means of transport, in particular an aircraft, comprising a cover pane (10), wherein the cover pane (10) is designed to substantially flush with the outer skin (5) in order to achieve an aerodynamically favourable, substantially smooth design of the outer skin (5);
a window frame (2) with a window frame outer face (3);
**characterised by** a supporting frame (9) arranged within the window aperture (7) with a supporting frame outer face (11), wherein the supporting frame (9) lies at least in some regions on the window frame outer face (3);
wherein the cover pane (10) lies on the supporting frame (9), is in particular connected thereto at least in some regions, and wherein the window frame outer face (11) comprises indentations at least in some regions in order to achieve back-ventilation of the cover pane (10).

2. Window element (1) according to claim 1, wherein the window frame outer face (3) in an edge area (6) of the window aperture (7) can be connected at least in some regions to an outer skin inner face (4).

3. Window element (1) according to any one of claims 1 to 2, **characterised in that** the supporting frame (9) comprises at least one connecting element (12) for connection to the window frame (2) and a pressing frame (15).

4. Window element (1) according to any one of claims 1 to 3, **characterised in that** a window frame seal (24) may be clamped between the pressing frame (15) and the window frame (2) to receive an inner pane (25) and an outer pane (26) by means of the connecting element (12) or the connecting elements.

5. Window element (1) according to any one of claims 1 to 4, **characterised in that** the connecting element (12) or the connecting elements are embodied in particular as stud bolts (13) with threaded nuts (22) that may be guided through boreholes (19) in the window frame (2) and in the pressing frame (15).

6. Window element (1) according to any one of claims 1 to 5, **characterised in that** the boreholes in the pressing frame (15) comprise reinforcing elements, in particular inlets (20).

7. Window element (1) according to any one of claims 1 to 6, **characterised in that** at least six stud bolts (13), preferably spaced at approximately uniform distances from each other, are arranged on the supporting frame (9), in particular welded or riveted thereon.

8. Window element (1) according to any one of claims 1 to 7, **characterised in that** the window frame (2) has a substantially rectangular cross-sectional geometry.

9. Window element (1) according to any one of claims 1 to 8, **characterised in that** the window frame (2) is formed with a plastic material, in particular a fibre-reinforced plastic material and/or a metal.

10. Window element (I) according to any one of claims 1 to 9, **characterised in that** the pressing frame (15) is formed with a plastic material, in particular a fibre-reinforced plastic material.

11. Window element (1) according to any one of claims 1 to 10, **characterised in that** the supporting frame (9) has a substantially rectangular cross-sectional geometry.

12. Window element (1) according to any one of claims 1 to 11, **characterised in that** the supporting frame (9) is embodied as a painted, coated and/or clad plate girder.

13. Window element (1) according to any one of claims 1 to 12, **characterised in that** the window frame outer face (3) is connected at least in some regions to the outer skin inner face (4), in particular glued and/or riveted thereto.

14. Window element (1) according to any one of claims 1 to 13, **characterised in that** the cover pane (10) is connected to the supporting frame (9), in particular glued and/or riveted thereto.

15. Window element (1) according to any one of claims 1 to 14, **characterised in that** the cover pane (10) is formed with a plastic material, in particular of polycarbonate.

## Revendications

1. Élément de fenêtre (1) pour installation dans une découpe de fenêtre (7) dans la peau de carrosserie (5) d'un moyen de transport, en particulier d'un avion, comprenant:
une plaque de couverture (10) installée pour l'essentiel de niveau avec la peau de carrosserie (5) afin d'obtenir une configuration considérablement lisse du revêtement (5), techniquement favorable aux écoulements;
un cadre de fenêtre (2) avec une surface externe (3) du cadre de fenêtre, l'élément de fenêtre étant **caractérisé en ce que**
une armature (9) installée dans la découpe de fenêtre (7) avec une surface externe (11) de l'armature,
l'armature (9) étant posée au moins partiellement sur la surface externe (3) du cadre de fenêtre;
la plaque de couverture (10) étant posée sur l'armature (9), en particulier au moins partiellement attachée à cette dernière, et
la surface externe (11) de l'armature présentant au moins partiellement des creux afin d'obtenir une aération sur l'arrière de la plaque de couverture (10).

2. Élément de fenêtre (1) selon la revendication 1, dans lequel la surface externe (3) du cadre de fenêtre peut être attachée au moins partiellement à une surface interne (4) du revêtement dans une région périphérique (6) de la découpe de fenêtre (7).

3. Élément de fenêtre (1) selon l'une quelconque des revendications 1 et 2, **caractérisé en ce que** l'armature (9) présente au moins un élément d'attache (12) pour l'attacher au cadre de fenêtre (2) et à un cadre de pression (15).

4. Élément de fenêtre (1) selon l'une quelconque des revendications 1 à 3, **caractérisé en ce qu'**un joint d'étanchéité (24) du cadre de fenêtre peut être serré au moyen de l'élément d'attache (12), ou des éléments d'attache, entre le cadre de pression (15) et le cadre de fenêtre (2) pour recevoir une vitre interne (25) et une vitre externe (26).

5. Élément de fenêtre (1) selon l'une quelconque des revendications 1 à 4, **caractérisé en ce que** l'élément d'attache (12) ou les éléments d'attache sont constitués de goujons filetés (13), passant au travers de trous (19) dans le cadre de fenêtre (2) et dans le cadre de pression (15), et d'écrous (22).

6. Élément de fenêtre (1) selon l'une quelconque des revendications 1 à 5, **caractérisé en ce que** les trous dans le cadre de fenêtre (15) comprennent des éléments de renfort, particulièrement des chemises d'entrée (20).

7. Élément de fenêtre (1) selon l'une quelconque des revendications 1 à 6, **caractérisé en ce qu'**au moins six goujons filetés (13) sont disposés, de préférence à intervalle régulier l'un par rapport à l'autre, sur l'armature, en particulier soudés ou rivetés à celle-ci.

8. Élément de fenêtre (1) selon l'une quelconque des revendications 1 à 7, **caractérisé en ce que** le cadre de fenêtre (2) présente une section de géométrie essentiellement rectangulaire.

9. Élément de fenêtre (1) selon l'une quelconque des revendications 1 à 8, **caractérisé en ce que** le cadre de fenêtre (2) est fabriqué en une matière plastique, particulièrement une matière plastique renforcée de fibres, et/ou en métal.

10. Élément de fenêtre (1) selon l'une quelconque des revendications 1 à 9, **caractérisé en ce que** le cadre de pression (15) est fabriqué en une matière plastique, particulièrement une matière plastique renforcée de fibres.

11. Élément de fenêtre (1) selon l'une quelconque des revendications 1 à 10, **caractérisé en ce que** l'armature (9) présente une section de géométrie essentiellement rectangulaire.

12. Élément de fenêtre (1) selon l'une quelconque des revendications 1 à 11, **caractérisé en ce que** l'armature (9) est constituée d'une poutre composée peinte, enduite et/ou cachée.

13. Élément de fenêtre (1) selon l'une quelconque des revendications 1 à 12, **caractérisé en ce que** la surface externe (3) du cadre de fenêtre est au moins partiellement attachée à la surface interne (4) de la peau de carrosserie, en particulier collée ou rivetée à celle-ci.

14. Élément de fenêtre (1) selon l'une quelconque des revendications 1 à 13, **caractérisé en ce que** la plaque de couverture (10) du cadre de fenêtre est au moins partiellement attachée à l'armature (9), en particulier collée ou rivetée à celle-ci.

15. Élément de fenêtre (1) selon l'une quelconque des revendications 1 à 14, **caractérisé en ce que** la plaque de couverture (10) est fabriquée en une matière plastique, en particulier en polycarbonate.
